Europäisches Patentamt

(19) European Patent Office

Office européen des brevets

(11) Publication number: **0 454 423 A1**

(12) **EUROPEAN PATENT APPLICATION**

(21) Application number: 91303652.1

(22) Date of filing: 23.04.91

(51) Int. Cl.⁵: **G02F 1/1347, A63F 9/00**

(30) Priority: 23.04.90 GB 9009089

(43) Date of publication of application:
30.10.91 Bulletin 91/44

(84) Designated Contracting States:
DE FR IT NL

(71) Applicant: TFE HONG KONG LIMITED
Room 1301-1302 Eastern Centre, 1065 Kings
Road
Quarry Bay (HK)

(72) Inventor: Wong, Arthur Fun Wah
4A Mayflower Mansion
11 Wang Fung Terrace, Tai Han Road (HK)

(74) Representative: Luckhurst, Anthony Henry
William et al
MARKS & CLERK 57-60 Lincoln's Inn Fields
London WC2A 3LS (GB)

(54) **A liquid crystal display.**

(57) A LCD display 100 is disclosed which comprises a plurality of transparent display layers 110, 120, 130 superimposed one on another, each display layer including a liquid crystal region and electrodes for applying a voltage across at least one portion of the region to display an image. A display of this construction allows three-dimensional images, and effects of depth and collision to be more clearly shown, particularly for use with a hand-held or table-top electronic game.

Fig 3a

EP 0 454 423 A1

This invention relates to a liquid crystal display particularly, but not exclusively, for use with a hand-held or table-top electronic game.

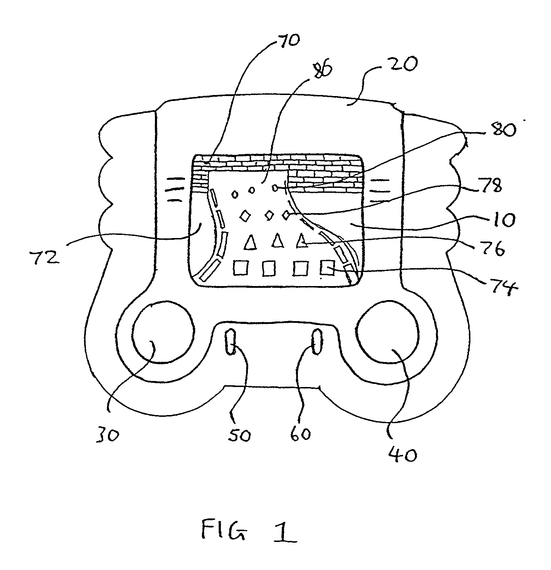

Hand-held electronic games of the type generally shown in Fig. 1 have been proposed, such games including a liquid crystal display 10 mounted in a casing 20 formed of plastics material. Two buttons 30, 40 are provided and are disposed so that when the game is held in both hands, the buttons 30, 40 can be actuated by the user's thumbs. Optionally, a button 50 for selecting one of a plurality of available games and a "set" button 60 for a time function may be provided.

A game program is stored in a micro-processor and, in accordance with the program, images may be displayed on the display 10 and certain of the images "moved" by operation of buttons 30, 40. The display 10 has a background 70 and a transparent LCD display layer which includes a liquid crystal region provided with a network of transparent electrodes on opposed sides thereof, a pair of opposed electrodes being of a shape to provide a required image when a voltage is passed therebetween, as is well known in the art.

In the display shown in Fig. 1, the background 70, for example, may illustrate a road 86 and the electrodes may selectively display, for example, motorcycles racing one another. These are schematically shown in the drawing of Fig. 1 as squares 74, triangles 76, diamonds 78 and circles 80. The images 74, 76, 78, 80 are of steadily reducing size and the background 70 is drawn in perspective to give a three-dimensional effect.

The game player is able to move his motor-cycle represented by squares 74 into one of the four indicated positions in order to avoid conflict with other motor-cycles represented by triangles 76. In the game, motor-cycle 74 "overtakes" motor-cycles 76 which are selectively seen to approach from positions 80 to 78 to 76. This gives some notice so that avoiding action can be taken to avoid a crash which would result in the loss of a "life".

It is a disadvantage of displays used in such games that images cannot be superimposed one on another to show a crash, for example as this would cause a short circuit between the display electrodes.

Furthermore, use of perspective in the images and background does not provide a convincing impression of depth.

It is an object of the invention to provide a liquid crystal display which alleviates the disadvantages noted above.

According to the invention in a first aspect, there is provided a liquid crystal display comprising a plurality of transparent display layers superimposed one on another, each display layer including a liquid crystal region and electrode means for applying a voltage across at least one portion of the region to display an image of an object, the electrode means of two said layers includes electrodes to provide images of the same object; and means for displaying the images sequentially.

According to the invention in a second aspect, there is provided an electronic game comprising a display having a plurality of display layers superimposed one on another, each display layer including a liquid crystal region and electrode means for applying a voltage across at least one portion of the region to display an image of an object.

Preferably, the electrode means of two or more said layers are of such shape to provide a three-dimensional image of an object, or to provide images of an object which steadily decrease in size from one layer to another so that when shown consecutively the image appears to be moving away or towards the game player. Alternatively the electrodes of the layers provide images which overlap in the viewing direction of the display, so that collisions between two objects, by superimposing the images, may be shown.

An embodiment of the invention will now be described, via example, with reference to the accompanying drawings in which:

Fig. 1 shows a prior art hand-held game.

Fig. 2 is a schematic drawing of an embodiment of the invention.

Fig. 3 illustrates a first image effect which may be obtained with the embodiment, with Fig. 3A being an exploded perspective view of a display and Fig. 3B showing a first image effect obtained using the embodiment of the invention.

Figs. 4A and 4B are similar to Fig. 3 but showing another image effect which can be obtained using the embodiment of the invention.

Figs. 5A-5C are similar to Fig. 3 but showing two further image effects which can be obtained using the embodiment of the invention.

An embodiment of the invention is shown in Fig. 2 and comprises a LCD display generally designated 100 driven by a microprocessor 105, the display including two or more (in this case three) display layers 110, 120, 130, each layer including a liquid crystal region and a plurality of first and second transparent electrodes (not shown) disposed on either side of the liquid crystal region. As is well known in the art, the shape of the electrodes determines the image produced on the LCD layer as, when a voltage is applied across the electrodes the refractive index of the liquid crystal changes only over the part of the liquid crystal region which the electrodes cover.

The liquid crystal display layers 110, 120, 130 are superimposed one on another to provide an integral display and may be disposed contiguously, or spaced to provide an increased depth effect. A background e.g. as shown in Fig. 1, may also be provided behind the rear-most display layer 130.

A display of this construction allows three-dimensional images and perspective effects to be more effectively shown as well as allowing fine movement of images.

The electrodes of the display layers are addressed in multiplex fashion in the same way as a conventional LCD display, the only difference being that, effectively, addressing in the "Z" direction is possible in addition to the usual "X-Y" directions.

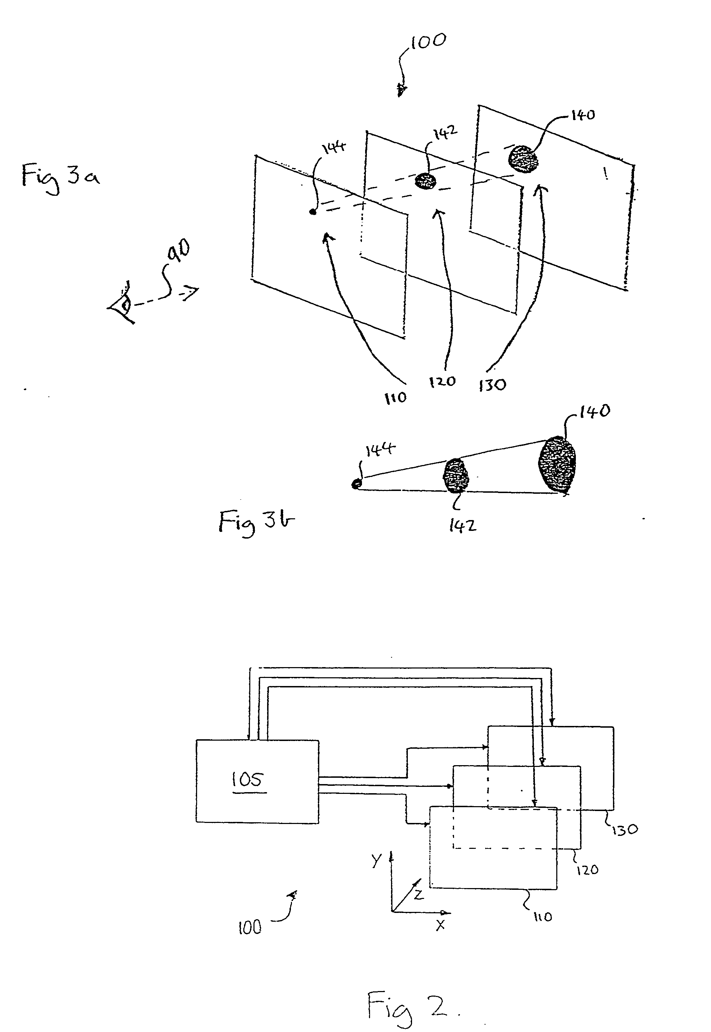

With reference to Fig. 3, a first application of the invention is illustrated in which a three-dimensional representation of an article is shown. Images of circles of steadily decreasing size 140, 142, 144 are provided on LCD display layers 130, 120, 110 and when all three images are shown together a "cone" image results as shown in Fig. 3B.

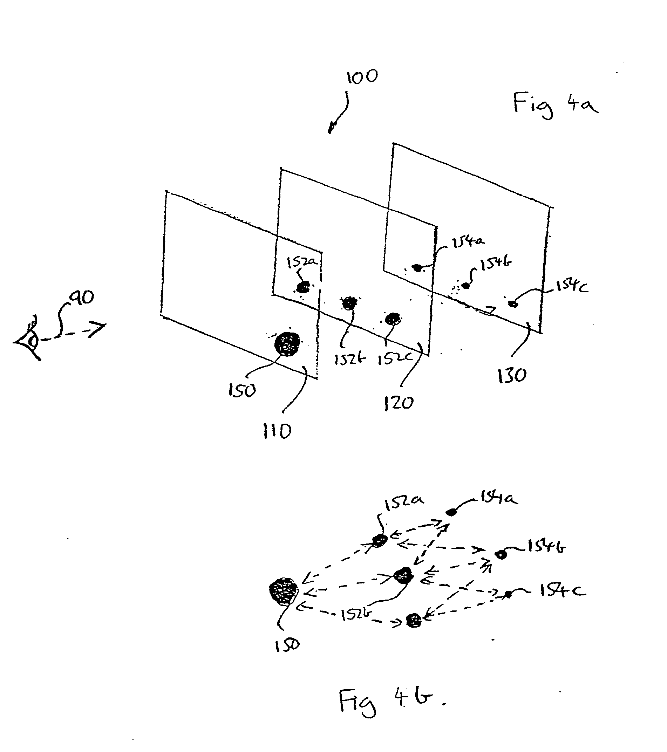

Fig. 4 shows how the display 100 may be used to provide an enhanced movement effect along the viewing direction 90 in which similar images 150, 152 a, b, c and 154 a, b, c are provided on screen layers 110, 120, 130; successive showing of image 150 and one of images 152 a, b, c and one of images 154 a, b, c gives the impression of an object moving away from the front of the screen. Movement across the screen can also be shown, for example, by showing image 154b, then image 152a and then image 150.

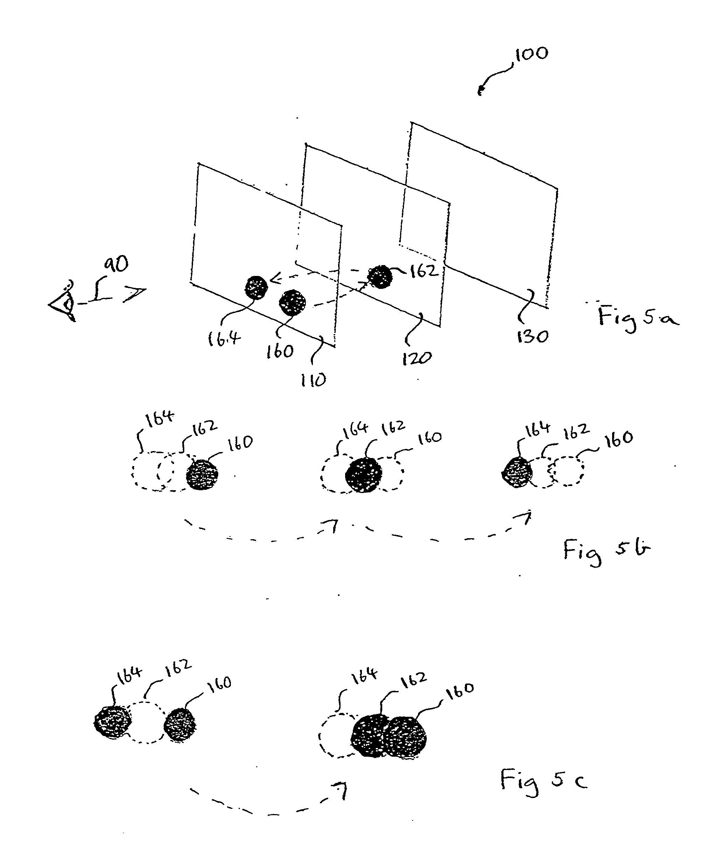

With reference to Fig. 5 two further movement effects are illustrated. In Fig. 5B, images 160 and 164 are provided on display layer 110 and image 162 is provided on display layer 120. As shown in Fig. 5B, if the images 160, 162 and 164 show the same object, significantly finer movement of that object by successively showing images 160, 162 and 164 can be obtained, as image 162 overlaps both images 160 and 164. It is not possible to do this in the prior art display as this would entail adjacent electrodes touching one another which would result in a short circuit.

In Fig. 5C if image 160 portrays a different object to images 164 and 162, a collision between the objects can be more clearly illustrated as display of image 160 and 162 simultaneously will result in the images being partly superimposed. In the prior art display this is not possible, again because this would require adjacent electrodes to be touching thus creating a short circuit.

While the embodiment of the invention has been described in conjunction with an electronic game, this is not to be construed as limitative and the display may be used for any application.

## Claims

1) A liquid crystal display comprising a plurality of transparent display layers (110, 120, 130) superimposed one on another, each display layer including a liquid crystal region and electrode means for applying a voltage across at least one portion of the region to display an image of an object, the electrode means of two said layers includes electrodes to provide images (150, 152a) of the same object; and means (105) for displaying the images sequentially.

2) A display as claimed in claim 1 wherein said images (150, 152a) are of relatively different size.

3) A display as claimed in claim 1 wherein said images (160, 162) are of the same size.

4) A display as claimed in claim 3 wherein the images (160, 162) overlap in the viewing direction of the display.

5) A display as claimed in any one of the preceding claims wherein the display comprises three said layers (110, 120, 130).

6) A display as claimed in any one of the preceding claims wherein two adjacent said layers (110, 120) are contiguous.

7) A display as claimed in any one of the preceding claims wherein a gap is provided between two adjacent said layers (110, 120).

8) A display as claimed in any one of the preceding claims further comprising a back or side light or reflector for illuminating the display.

9) A display as claimed in any one of the preceding claims further comprising a background viewable through the display layers in the viewing direction.

10) An electronic game having a liquid crystal display as claimed in any one of the preceding claims.

11) A game as claimed in claim 10 wherein the game is of a hand-held or table-top type.

12) An electronic game comprising a display having a plurality of display layers (110, 120, 130) superimposed one on another, each display layer including a liquid crystal region and electrode means for applying a voltage across at least one portion of the region to display an image of an object.

13) An electronic game as claimed in claim 12 wherein the electrode means of two said layers are of such shape to provide a three-dimensional image (142, 144) of an object when displayed simultaneously.

14) An electronic game as claimed in claim 12 wherein the images (160, 162) of two said layers are of different objects and are arranged to be displayed simultaneously.

15) An electronic game as claimed in claim 14 wherein the images overlap in the viewing direction of the display.

FIG 1

Fig 3a

Fig 3b

Fig 2.

Fig 4a

Fig 4b.

Fig 5a

Fig 5b

Fig 5c

**European Patent
Office**

**EUROPEAN SEARCH REPORT**

Application Number

EP    91 30 3652

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN<br>vol. 12, no. 102 (P-684)April 5, 1988<br>& JP-A-62 235 929 (STANLEY ELECTRIC ) October 16, 1987<br>* the whole document * | 1-8 | G02F1/1347<br>A63F9/00 |
| X | PATENT ABSTRACTS OF JAPAN<br>vol. 12, no. 254 (E-634)July 16, 1988<br>& JP-A-63 039 299 (SONY CORP ) February 19, 1988<br>* the whole document * | 1-8 | |
| X<br>Y | JP-A-02 090 127 (KAZUHIRO FUJII) March 29, 1990<br>* the whole document *<br>& PATENT ABSTRACTS OF JAPAN<br>vol. 14, no. 293 (P-1066) June 25, 1990 | 1-8<br>9-15 | |
| Y | PLAYTHINGS.<br>August 1989, NEW YORK US<br>pages 44 - 45;<br>* page 45 game "Super Golf" * | 9-15 | |
| A | PATENT ABSTRACTS OF JAPAN<br>vol. 10, no. 160 (P-465)June 7, 1986<br>& JP-A-61 013 226 (STANLEY DENKI KK ) January 21, 1986<br>* the whole document * | 1-2,4,7,<br>12-13 | TECHNICAL FIELDS SEARCHED (Int. Cl.5)<br><br>G02F<br>A63F |

The present search report has been drawn up for all claims

| Place of search | Date of completion of the search | Examiner |
|---|---|---|
| THE HAGUE | 01 AUGUST 1991 | IASEVOLI R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)